# EUROPÄISCHE PATENTSCHRIFT

(11) **EP 4 155 203 B1**
(45) Veröffentlichungstag und Bekanntmachung des Hinweises auf die Patenterteilung: **29.05.2024**
(21) Anmeldenummer: 21198247.5
(22) Anmeldetag: 22.09.2021
(51) Int. Cl.: B64D 9/00, B60P 7/13

(54) **LUFTFAHRZEUG UND VERRIEGELUNGSSYSTEM ZUM SICHERN VON FRACHTSTÜCKEN IM FRACHTRAUM EINES LUFTFAHRZEUGS**
AIRCRAFT AND LOCKING SYSTEM FOR SECURING FREIGHT ITEMS IN THE HOLD OF AN AIRCRAFT
AÉRONEF ET SYSTÈME DE VERROUILLAGE PERMETTANT DE FIXER DES PIÈCES DE FRET DANS LE COMPARTIMENT DE FRET D'UN AÉRONEF

(43) Veröffentlichungstag der Anmeldung: 29.03.2023
(73) Patentinhaber: Airbus Operations GmbH, 21129 Hamburg (DE)
(72) Erfinder: Fischer, Dennis, 21129 Hamburg (DE)
(74) Vertreter: Isarpatent

(56) Entgegenhaltungen:
- EP-A1- 2 899 124
- WO-A1-2010/149180
- DE-A1-102010 035 099
- DE-A1-102018 106 530

## Beschreibung

Die vorliegende Erfindung betrifft ein Verriegelungssystem zum Sichern von Frachtstücken im Frachtraum eines Luftfahrzeugs sowie ein Luftfahrzeug mit einem solchen Verriegelungssystem.

Im Frachtraum von Luftfahrzeugen werden Frachtstücke, wie z.B. Frachtbehälter, mittels Verriegelungssystemen am Boden des Frachtraums verankert. Typischerweise sind hierbei Haken bzw. hakenförmige Riegel im Boden des Frachtraums vorgesehen, welche ausklappbar bzw. in einer Schwenkbewegung aufstellbar sind, um das Frachtstück mit dem Boden zu verriegeln.

In derartigen Verriegelungssystemen haben sich insbesondere Verriegelungseinrichtungen bewährt, welche zwei in einem Rahmen drehbar gelagerte Haken aufweisen, die derart kinematisch aneinander gekoppelt sind, dass ein Aufklappen eines ersten Hakens aus dessen Verstauposition in eine Verriegelungsposition, in welcher dieser das Frachtstück sichert, ein Aufklappen oder Aufstellen des weiteren, zweiten Hakens bewirkt. Zum Verbringen der beiden Haken zurück in deren Verstauposition, wird der zweite Haken aus der Aufstellposition zurück in die Verstauposition geschwenkt und nimmt dabei den ersten Haken mit. Ein derartiges Verriegelungssystem ist z.B. in der DE 42 24 820 C1 offenbart.

Das Aufklappen und Zurückklappen oder allgemein das Verschwenken der Haken erfolgt typischerweise manuell. In der DE 10 2010 035 099 A1 und in der US 2019/0322369 A1 wurden ferner Verriegelungssysteme beschrieben, in welchen die Verriegelungshaken automatisch mittels eines Aktuators aufstellbar sind.

Dokument WO 2010/149180 A1 beschreibt ein Riegelelement zum Sichern von Containern, Paletten oder dergleichen Frachtstücken in einem Laderaum eines Flugzeugs, wobei eine erste und eine zweite Riegelklaue an einem Rahmen von einer abgesenkten Ladeposition in eine hochgestellte Arbeitsposition zum Festhalten der Container verschwenkbar angebracht sind.

Dokument DE 10 2018 106530 A1 beschreibt eine halbautomatische Arretierbaugruppe, die ein Gehäuse, eine Sperrklinke, die drehbar an das Gehäuse gekoppelt ist, um bezogen auf das Gehäuse eine zurückgezogene und aufgerichtete Position einzunehmen und sich zwischen diesen zu drehen, und eine drehmomenterzeugende Baugruppe beinhaltet.

Es ist Aufgabe der vorliegenden Erfindung, verbesserte Lösungen für Verriegelungssysteme zum Sichern von Frachtstücken im Frachtraum eines Luftfahrzeugs zu finden, insbesondere Lösungen, mit denen sich eine automatische Betätigung des Verriegelungssystems mit konstruktiv einfachen Mitteln umsetzen lässt.

Diese Aufgabe wird jeweils durch ein Verriegelungssystem mit den Merkmalen des Anspruchs 1 sowie durch ein Luftfahrzeug mit den Merkmalen des Anspruchs 11 gelöst.

Nach einem ersten Aspekt der Erfindung umfasst ein Verriegelungssystem zum Sichern von Frachtstücken im Frachtraum eines Luftfahrzeugs einen Rahmen mit einem ersten Seitenteil und einem sich parallel zu dem ersten Seitenteil erstreckenden zweiten Seitenteil, einen um eine erste Drehachse an den Seitenteilen drehbar gelagerten ersten Haken, der um die erste Drehachse zwischen einer Verstauposition, in welcher der erste Haken sich entlang der Seitenteile erstreckt, und einer Verriegelungsposition zur Sicherung eines Frachtstücks verschwenkbar ist, in welcher der erste Haken sich quer zu den Seitenteilen erstreckt, und einen um eine zweite Drehachse an den Seitenteilen drehbar gelagerten zweiten Haken, der um die zweite Drehachse zwischen einer Verstauposition, in welcher der zweite Haken sich entlang der Seitenteile erstreckt, und einer Aufstellposition verschwenkbar ist, in welcher der zweite Haken mit dem ersten Haken verrastet ist und den ersten Haken in dessen Verriegelungsposition gegen ein Verschwenken zurück in die Verstauposition sichert, z.B. durch eine formschlüssige Kopplung zwischen dem ersten und dem zweiten Haken. Der zweite Haken ist an den ersten Haken derart kinematisch gekoppelt, dass ein Verschwenken des ersten Hakens aus dessen Verstauposition in dessen Verriegelungsposition ein Verschwenken des zweiten Hakens aus dessen Verstauposition in dessen Aufstellposition bewirkt, und derart, dass ein Verschwenken des zweiten Hakens aus dessen Aufstellposition in dessen Verstauposition ein Verschwenken des ersten Hakens aus dessen Verriegelungsposition in dessen Verstauposition bewirkt. Die erste und die zweite Drehachse sind parallel zueinander.

Ferner umfasst das Verriegelungssystem einen in Bezug auf eine Drehung um die erste Drehachse drehfest an den ersten Haken gekoppelten ersten Hakenmitnehmer, einen in Bezug auf eine Drehung um die zweite Drehachse drehfest an den zweiten Haken gekoppelten zweiten Hakenmitnehmer und ein Getriebe mit einem um die erste Drehachse relativ zum ersten Haken drehbaren ersten Mitnehmerrad, welches einen mit dem ersten Hakenmitnehmer in Eingriff bringbaren ersten Mitnehmer aufweist, und einem relativ zum zweiten Haken um die zweite Drehachse drehbaren zweiten Mitnehmerrad, welches einen mit dem zweiten Hakenmitnehmer in Eingriff bringbaren zweiten Mitnehmer aufweist, wobei das erste und das zweite Mitnehmerrad kinematisch derart aneinander gekoppelt sind, dass diese synchron drehbar sind, und wobei der erste Mitnehmer relativ zu dem ersten Hakenmitnehmer und der zweite Mitnehmer relativ zu dem zweiten Hakenmitnehmer derart positioniert sind, dass bei einer Drehung der Mitnehmerräder nur einer der Mitnehmer mit dem jeweiligen Hakenmitnehmer in Eingriff bringbar ist, um zum Verschwenken des ersten Hakens aus dessen Verstauposition in dessen Verriegelungsposition ein Drehmoment nur auf den ersten Haken und zum Verschwenken des zweiten Hakens aus dessen Aufstellposition in dessen Verstauposition ein Drehmoment nur auf den zweite Haken zu übertragen.

Weiterhin weist das Verriegelungssystem einen an das Getriebe gekoppelten Antriebsmotor zur Drehung der Mitnehmerräder auf.

Nach einem zweiten Aspekt der Erfindung ist ein Luftfahrzeug vorgesehen, welches einen Frachtraum zur Aufnahme von Fragstücken mit einem Boden und ein Verriegelungssystem nach dem ersten Aspekt der Erfindung aufweist, wobei der Rahmen an dem Boden des Frachtraums befestigt ist, z.B. über eine in dem Boden verankerte Schiene, an welcher der Rahmen befestigt ist.

Eine der Erfindung zugrundeliegende Idee besteht darin, das Verschwenken der kinematisch aneinander gekoppelten ersten und zweiten Haken dadurch zu realisieren, dass bei einem Aufstellen und bei einem Einklappen der Haken jeweils nur einer der beiden Haken über einen zu dem jeweiligen Haken ortsfesten Mitnehmer mit einem Drehmoment beaufschlagt wird, das durch ein motorisch angetriebenes Mitnehmerrad erzeugt wird.

An den ersten und den zweiten Haken ist jeweils ein Hakenmitnehmer drehfest gekoppelt. Die Mitnehmer an den Mitnehmerrädern und die Hakenmitnehmer können z.B. als blockförmige oder ringsegmentförmige Strukturen realisiert sein und sind miteinander in Eingriff bringbar, so dass die Mitnehmer der Mitnehmerräder die Hakenmitnehmer entlang einer Kreisbahn um die Drehachse, um die der jeweilige Haken drehbar gelagert ist, schieben können. Die Mitnehmer der Mitnehmerräder sind drehfest mit dem jeweiligen Mitnehmerrad verbunden, wobei die Mitnehmerräder z.B. koaxial zur jeweiligen ersten oder zweiten Drehachse angeordnet sein können. Die Mitnehmer der Mitnehmerräder sind relativ zu den Hakenmitnehmern derart angeordnet, dass bei einer Drehung der Mitnehmerräder nur einer der Mitnehmer mit dem jeweiligen Hakenmitnehmer in Eingriff bringbar ist. Das heißt, zum Verschwenken des ersten Hakens aus dessen Verstauposition in dessen Aufstell- oder Verriegelungsposition wird das erste Mitnehmerrad in einer ersten Drehrichtung gedreht. Dies bewirkt eine Drehung auch des zweiten Mitnehmerrads, wobei jedoch nur der erste Mitnehmer des ersten Mitnehmerrads mit dem ersten Hakenmitnehmer in Eingriff gelangt. In der Folge wird ein Drehmoment auf den ersten Haken übertragen und dieser in seine Aufstell- oder Verriegelungsposition verschwenkt. Der zweite Haken wird aufgrund seiner kinematischen Kopplung an den ersten Haken durch diesen mitbewegt und dadurch ebenfalls in seine Aufstellposition verschwenkt. Um die Haken wieder in ihre Verstaupositionen zu bewegen, wird das zweite Mitnehmerrad in einer zweiten Drehrichtung gedreht, was gleichzeitig eine Drehung des ersten Mitnehmerrads bewirkt, wobei jedoch nur der zweite Mitnehmer des zweiten Mitnehmerrads mit dem zweiten Hakenmitnehmer in Eingriff gelangt. Dadurch wird ein Drehmoment auf den zweiten Haken übertragen und dieser in seine Verstauposition verschwenkt. Der erste Haken wird aufgrund seiner kinematischen Kopplung an den zweiten Haken durch diesen mitbewegt und dadurch ebenfalls in seine Versposition verschwenkt.

In der Verstauposition erstrecken sich die Haken entlang der Seitenteile des Rahmens bzw. entlang einer Längsrichtung, in der sich die Seitenteile erstrecken. Die Seitenteile sind in einer sich quer zur Längsrichtung erstreckenden Querrichtung beabstandet. In der Aufstellposition bzw. der Verriegelungsposition erstecken sich die Haken quer zu den Seitenteilen des Rahmens bzw. entlang einer Vertikalrichtung, die sich quer zur Längs- und zur Querrichtung erstreckt. Insbesondere können die Haken in der Aufstellposition bzw. der Verriegelungsposition in Bezug auf die Vertikalrichtung über die Seitenteile vorstehen.

Ein Vorteil der Erfindung liegt darin, dass durch die Mitnehmerräder und die Hakenmitnehmer ein robuster und einfach aufgebauter Betätigungsmechanismus realisiert wird, mit dem die Haken automatisch bzw. mittels eines Antriebsmotors, z.B. in Form eines Elektromotors, verschwenkbar sind. Aufgrund der Anordnung der Mitnehmer derart, dass beim Schwenken in die Aufstell- bzw. Verriegelungsposition und beim Zurückschwenken der Haken in die Verstauposition jeweils nur einer der Haken mit einem Drehmoment über den jeweiligen Mitnehmer beaufschlagt wird, und da die Haken gegenseitig kinematisch miteinander gekoppelt sind, kann das Getriebe auch auf einfache Weise in bestehende Verriegelungssysteme nachgerüstet werden. Ein weiterer Vorteil liegt darin, dass die Mitnehmerräder relativ platzsparend sind und somit ein kompakt aufgebautes Verriegelungssystem realisiert wird.

Vorteilhafte Ausgestaltungen und Weiterbildungen ergeben sich aus den auf die unabhängigen Ansprüche rückbezogenen Unteransprüchen in Verbindung mit der Beschreibung.

Erfindungsgemäß ist vorgesehen, dass das erste Mitnehmerrad und das zweite Mitnehmerrad derart aneinander gekoppelt sind, dass sie ausschließlich in derselben Drehrichtung drehbar sind. Dies kann z.B. über Zwischenräder, einen Ketten- oder Riementrieb oder in ähnlicher Weise realisiert werden. Eine gleichläufige Kopplung der Mitnehmerräder erleichtert die Anordnung der Mitnehmer relativ zu den Hakenmitnehmern, insbesondere dann, wenn beide Haken zum Verschwenken zwischen den Aufstell- und Verstaupositionen in derselben Drehrichtung gedreht werden müssen.

Erfindungsgemäß ist vorgesehen, dass das erste und das zweite Mitnehmerrad als Zahnräder realisiert sind. Somit wird ein besonders robustes und einfach aufgebautes Getriebe realisiert.

Erfindungsgemäß ist insbesondere vorgesehen, dass das erste und das zweite Mitnehmerrad als Zahnräder realisiert, das erste Mitnehmerrad und das zweite Mitnehmerrad derart aneinander gekoppelt sind, dass sie ausschließlich in derselben Drehrichtung drehbar sind, und dass das erste und das zweite Mitnehmerrad über eine Anzahl an n Zwischenzahnrädern kinematisch aneinander gekoppelt sind, welche mit den Mitnehmerrädern in Eingriff stehen, wobei n eine ungerade ganze Zahl ist.

Gemäß manchen Ausführungsformen kann vorgesehen sein, dass das oder die Zwischenzahnräder an den Seitenteilen des Rahmens gelagert sind. Dadurch wird der Platzbedarf des Getriebes weiter verringert.

Gemäß manchen Ausführungsformen kann vorgesehen sein, dass der erste Haken drehfest mit einer ersten Welle verbunden ist, welche sich zwischen den Seitenteilen des Rahmens erstreckt und an den Seitenteilen um die erste Drehachse drehbar gelagert ist. Optional kann der erste Hakenmitnehmer an der ersten Welle angebracht sein. Beispielsweise kann der erste Hakenmitnehmer einstückig mit der ersten Welle ausgebildet, mit dieser verschraubt oder in anderer Weise an dieser befestigt sein. Weiterhin optional kann das erste Mitnehmerrad drehbar an der ersten Welle gelagert sein. Somit dient die erste Welle sowohl als Träger für den Hakenmitnehmer als auch als Träger bzw. Lagerstelle für das erste Mitnehmerrad, wodurch eine hohe funktionale Integration und somit ein kompakter Aufbau erzielt wird.

Gemäß manchen Ausführungsformen kann vorgesehen sein, dass der zweite Haken drehfest mit einer zweiten Welle verbunden ist, welche sich zwischen den Seitenteilen des Rahmens erstreckt und an den Seitenteilen um die zweite Drehachse drehbar gelagert ist. Optional kann der zweite Hakenmitnehmer an der zweiten Welle angebracht sein. Weiterhin optional kann das zweite Mitnehmerrad drehbar an der zweiten Welle gelagert sein. Somit dient die zweite Welle sowohl als Träger für den zweiten Hakenmitnehmer als auch als Träger bzw. Lagerstelle für das zweite Mitnehmerrad, wodurch eine hohe funktionale Integration und somit ein kompakter Aufbau erzielt wird.

Gemäß manchen Ausführungsformen kann vorgesehen sein, dass das Getriebe ein Eingangsrad aufweist, welches die Mitnehmerräder antreibt und welches mit einer Antriebswelle des Antriebsmotors verbunden ist. Beispielsweise kann das Eingangsrad direkt mit einem der Mitnehmerräder in Eingriff stehen. Alternativ ist auch denkbar, dass das Eingangsrad über ein oder mehrere Zwischenräder, über einen Ketten- oder Riementrieb oder in ähnlicher Weise mit einem der Mitnehmerräder gekoppelt ist.

Gemäß manchen Ausführungsformen kann vorgesehen sein, dass der Antriebsmotor zwischen den Seitenteilen des Rahmens angeordnet ist. Dadurch wird der Platzbedarf des Verriegelungssystems vorteilhaft weiter verringert.

Gemäß manchen Ausführungsformen kann vorgesehen sein, dass der erste Haken und der zweite Haken über eine Feder aneinander gekoppelt sind. Unabhängig von der Kopplung über die Feder, kann jeder Haken beispielsweise einen länglichen Profilabschnitt und einen Halteabschnitt aufweisen, der in einem ersten Endbereich des Profilabschnitts von diesem vorsteht, so dass der Endbereich des Profilabschnitts und der Halteabschnitt eine Hakenform definieren. In einem zweiten Endbereich des Profilabschnitts ist eine Lagerstelle vorgesehen, an welcher der Haken an dem jeweiligen Seitenteil drehbar gelagert ist, wobei die Lagerstelle beabstandet zum Ende des Profilabschnitts gelegen ist. Die Profilabschnitte von erstem und zweitem Haken überkreuzen sich. In einer derartigen Konfiguration kann die kinematische Kopplung über die Feder vorteilhaft dadurch realisiert werden, dass die Feder jeweils am Ende oder zwischen dem Ende und der Lagerstelle mit den Profilabschnitten beider Haken verbunden ist. Durch die Drehung eines der Haken um dessen Lagerstelle wird über die Feder eine Kraft bzw. ein Moment auf den jeweils anderen Haken ausgeübt, so dass dieser um dessen Lagerstelle gedreht wird.

Gemäß manchen Ausführungsformen kann vorgesehen sein, dass das Verriegelungssystem eine elektronische Steuerungsvorrichtung, welche mit dem Antriebsmotor signalleitend verbunden ist, und eine signalleitend mit der Steuerungsvorrichtung verbundene Sensoranordnung aufweist, die dazu eingerichtet ist, die jeweilige Position des ersten Hakens und des zweiten Hakens zu detektieren, wobei die Steuerungsvorrichtung dazu eingerichtet ist, den Antriebsmotor abhängig von der detektierten Position der Haken mit verschiedenen Drehrichtungen zu betreiben und/oder den Betrieb des Antriebsmotors zu stoppen, wenn die detektierte Position der Haken deren Verstauposition oder deren Aufstellposition bzw. Verriegelungsposition entspricht. Die elektronische Steuerungsvorrichtung kann z.B. eine Prozessoreinheit, wie eine CPU, einen FPGA, einen ASIC oder dergleichen, und einen durch die Prozessoreinheit lesbaren nicht-flüchtigen Speicher, wie z.B. einen SD-Speicher, einen Flash-Speicher oder dergleichen, aufweisen. Der Speicher kann Software speichern, die durch die Prozessoreinheit ausführbar ist, z.B. um basierend auf den von der Sensoranordnung erhaltenen Sensorsignale Betätigungssignale zum Betreiben des Antriebsmotors zu erzeugen. Optional kann die elektronische Steuerungsvorrichtung auch eine drahtlose Datenschnittstelle aufweisen, welche zum Empfang von Steuersignalen eingerichtet ist, und dazu eingerichtet sein, Betätigungssignale an den Antriebsmotor basierend auf den Steuersignalen auszugeben. Dies erleichtert eine ferngesteuerte Bedienung des Verriegelungssystems. Die Sensoranordnung kann insbesondere Näherungssensoren enthalten, um die Position der Haken zu detektieren.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner gleich 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: eine Draufsicht auf ein Verriegelungssystem nach einem Ausführungsbeispiel der vorliegenden Erfindung;
- Fig. 2: eine vereinfachte Schnittansicht des Verriegelungssystems aus Fig. 1, wobei ein erster und ein zweiter Haken des Verriegelungssystems in einer Verstauposition angeordnet sind;
- Fig. 3: eine Seitenansicht des in Fig. 1 gezeigten Verriegelungssystems, wobei der erste und der zweite Haken in einer Aufstellposition angeordnet sind;
- Fig. 4(A): eine Darstellung der Positionen von Hakenmitnehmern und ersten und zweiten Mitnehmern in der Verstauposition der Haken;
- Fig. 4(B): eine Darstellung der Positionen der Hakenmitnehmer und der ersten und zweiten Mitnehmer in der Aufstellposition der Haken; und
- Fig. 5: eine schematische Darstellung eines Luftfahrzeugs gemäß einem Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

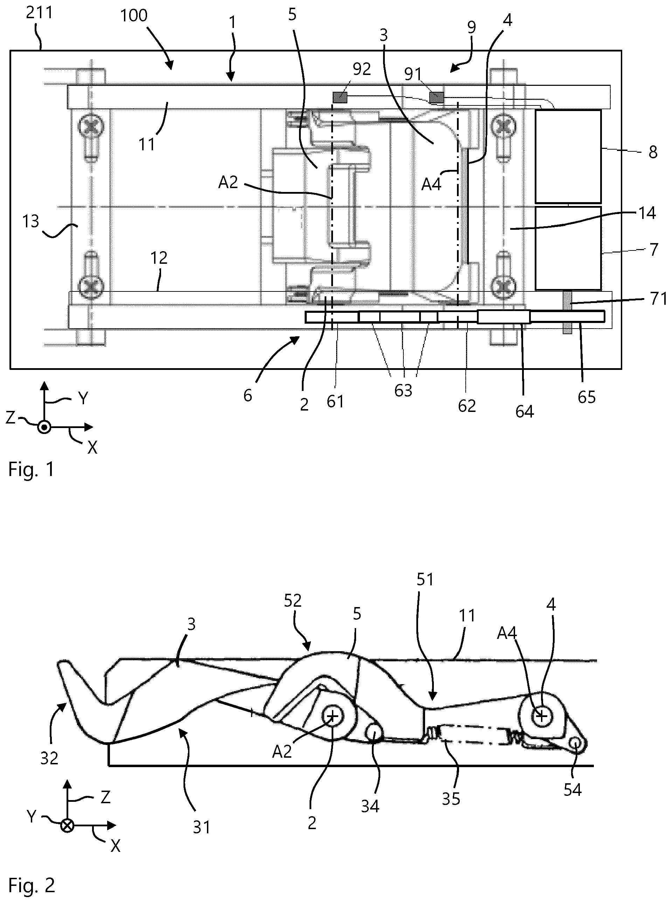

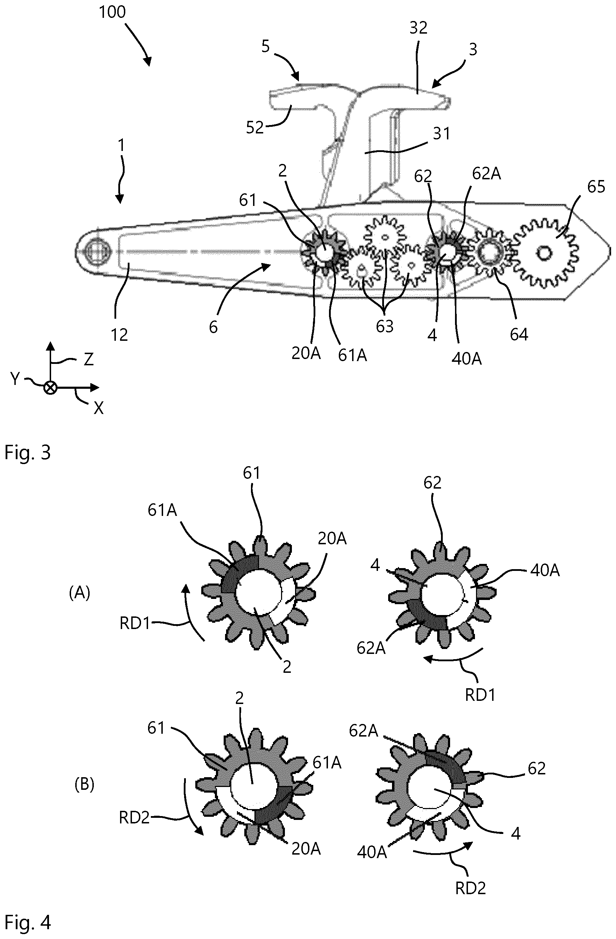

Fig. 1 zeigt eine Draufsicht auf ein Verriegelungssystem 100 zum Sichern von Frachtstücken im Frachtraum 210 eines Luftfahrzeugs 200. Fig. 2 zeigt eine Schnittansicht des Verriegelungssystems 100. Fig. 3 zeigt das Verriegelungssystem in einer Seitenansicht.

Wie in den Fign. 1 bis 3 dargestellt, umfasst das Verriegelungssystem 100 einen Rahmen 1, einen ersten Haken 3, einen zweiten Haken 5, eine Getriebe 6 und einen Antriebsmotor 7. Optional kann das Verriegelungssystem 100 ferner eine elektronische Steuerungsvorrichtung 8 und eine Sensoranordnung 9 aufweisen.

Wie in Fig. 1 gezeigt, weist der Rahmen 1 ein erstes Seitenteil 11 und ein zweites Seitenteil 12 auf. Die Seitenteile 11, 12 können allgemein als sich in einer Längsrichtung X erstreckende Träger ausgebildet sein, die parallel zueinander verlaufen und in einer sich quer zur Längsrichtung X erstreckenden Querrichtung Y zueinander beabstandet sind. Wie in Fig. 1 weiterhin gezeigt, können die Seitenteile 11, 12 miteinander verbunden sein, z.B. durch zwei in der Längsrichtung X zueinander beabstandete Querverbinder 13, 14. Der Rahmen 1 dient zur Verbindung des Verriegelungssystems 100 mit einem Boden 211 des Frachtraums 210. Beispielsweise können die Querverbinder 13, 14 mit im Boden 211 verankerten Schienen bzw. U-Profilen (nicht gezeigt) verbunden werden.

Der erste und der zweite Haken 3, 5 sind am besten in den Fign. 2 und 3 zu erkennen. Wie insbesondere in Fig. 2 erkennbar ist, kann der erste Haken 3 z.B. einen sich im Wesentlichen länglich erstreckenden Profilabschnitt 31 und einen in einem ersten Endbereich von dem Profilabschnitt 31 von diesem vorstehenden bzw. sich quer zu diesem erstreckenden Hakenabschnitt 32 aufweisen. Der Profilabschnitt 31 und der Hakenabschnitt 32 bilden eine Hakenform aus. Der Hakenabschnitt 32 ist zur Fixierung eines bzw. zum Eingriff mit einem Frachtstück, wie z.B. einem Container, vorgesehen. Der erste Haken 3 ist an den Seitenteilen 11, 12 des Rahmens 1 um eine erste Drehachse A2 drehbar gelagert. Die erste Drehachse A2 erstreckt sich dabei in der Querrichtung Y bzw. allgemein quer zu den Seitenteilen 11, 12. Wie in Fig. 2 beispielhaft gezeigt, kann der erste Haken 3 insbesondere in einem zweiten Endbereich des Profilabschnitts 31 drehbar gelagert sein. Zur drehbaren Lagerung an den Seitenteilen 11, 12 kann der erste Haken 3 z.B. drehfest mit einer ersten Welle 2 verbunden sein, welche sich zwischen den Seitenteilen 11, 12 erstreckt und ihrerseits um die erste Drehachse A2 drehbar an den Seitenteilen 11, 12 gelagert ist.

Der erste Haken 3 ist um die erste Drehachse A2 zwischen einer Verstauposition und einer Aufstell- oder Verriegelungsposition verschwenkbar bzw. bewegbar. Die Fig. 2 zeigt eine Anordnung des ersten Hakens 3 in der Verstauposition. In der Verstauposition erstreckt sich der erste Haken 3, insbesondere dessen Profilabschnitt 31 entlang der Seitenteile 11, 12 bzw. entlang der Längsrichtung X. Optional kann der Profilabschnitt 31 in der Verstauposition in Bezug auf eine sich quer zur Längsrichtung X und quer zur Querrichtung Y erstreckende Vertikalrichtung Z vollständig innerhalb des Rahmens 1 gelegen sein. Der Hakenabschnitt 31 kann in der Verstauposition des erste Hakens 3 in Bezug auf die Vertikalrichtung Z ebenfalls vollständig innerhalb des Rahmens 1 gelegen sein oder um eine vorbestimmte erste Länge über den Rahmen 1 bzw. die Seitenteile vorstehen.

In den Fign. 1 und 3 ist der erste Haken 3 in der Aufstellposition gezeigt. In der Aufstellposition erstreckt sich der erste Haken 3 quer zu den Seitenteilen 11, 12. Beispielsweise kann der Haken 3 in der Aufstell- bzw. Verriegelungsposition in Bezug auf die Vertikalrichtung Z über die Seitenteile 11, 12 vorstehen, insbesondere mit dessen Hakenabschnitt 32, wie dies in Fig. 3 gezeigt ist. In der Aufstellposition ist der erste Haken 3 zur Sicherung eines Frachtstücks angeordnet. Durch die Form des ersten Hakens 3 mit Profilabschnitt 31 und Hakenabschnitt 32 kann in der Aufstellposition ein Frachtstück z.B. in Bezug auf die Vertikalrichtung Z und die Längsrichtung X gegen Verrutschen gesichert werden.

Wie in Fig. 2 ferner erkennbar ist, kann der zweite Haken 5 z.B. einen sich im Wesentlichen länglich erstreckenden Profilabschnitt 51 und einen in einem ersten Endbereich von dem Profilabschnitt 51 von diesem vorstehenden bzw. sich quer zu diesem erstreckenden Hakenabschnitt 52 aufweisen. Der Profilabschnitt 51 und der Hakenabschnitt 52 bilden eine Hakenform aus. Der Hakenabschnitt 52 ist zur Fixierung eines bzw. zum Eingriff mit einem Frachtstück, wie z.B. einem Container, vorgesehen. Der zweite Haken 5ist an den Seitenteilen 11, 12 des Rahmens 1 um eine zweite Drehachse A4 drehbar gelagert. Die zweite Drehachse A4 erstreckt sich dabei in der Querrichtung Y bzw. allgemein quer zu den Seitenteilen 11, 12.

Vorzugsweise sind die erste und die zweite Drehachse A2, A4 parallel und in der Längsrichtung X beabstandet. Wie in Fig. 2 beispielhaft gezeigt, kann der zweite Haken 5 insbesondere in einem zweiten Endbereich des Profilabschnitts 51 drehbar gelagert sein. Zur drehbaren Lagerung an den Seitenteilen 11, 12 kann der zweite Haken 5 z.B. drehfest mit einer zweiten Welle 4 verbunden sein, welche sich zwischen den Seitenteilen 11, 12 erstreckt und ihrerseits um die zweite Drehachse A4 drehbar an den Seitenteilen 11, 12 gelagert ist. Wie in den Fign. 1 bis 3 gezeigt ist, sind die Hakenabschnitte 32, 52 der ersten und zweiten Haken 3, 5 entgegengesetzt zueinander orientiert.

Der zweite Haken 5 ist um die zweite Drehachse A4 zwischen einer Verstauposition und einer Aufstell- oder Verriegelungsposition verschwenkbar bzw. bewegbar. Fig. 2 zeigt eine Anordnung des zweiten Hakens 5 in der Verstauposition. In der Verstauposition erstreckt sich der zweite Haken 5, insbesondere dessen Profilabschnitt 51 entlang der Seitenteile 11, 12 bzw. entlang der Längsrichtung X. Optional kann der Profilabschnitt 51 in der Verstauposition in Bezug auf die Vertikalrichtung Z vollständig innerhalb des Rahmens 1 gelegen sein. Der Hakenabschnitt 51 kann in der Verstauposition des zweiten Hakens 5 in Bezug auf die Vertikalrichtung Z ebenfalls vollständig innerhalb des Rahmens 1 gelegen sein oder um eine vorbestimmte erste Länge über den Rahmen 1 bzw. die Seitenteile vorstehen, wie dies in Fig. 2 beispielhaft gezeigt ist. Wie in Fig. 2 weiterhin erkennbar ist, können die Profilabschnitte 31, 51 der ersten und zweiten Haken 3, 5 in der Verstaustellung entlang einander ausgerichtet sein, wobei der Hakenabschnitt 52 des zweiten Hakens 5 den Profilabschnitt 31 des ersten Hakens 3 kreuzt.

In den Fign. 1 und 3 ist der zweite Haken 5 in seiner Aufstellposition gezeigt. In der Aufstellposition erstreckt sich der zweite Haken 5 quer zu den Seitenteilen 11, 12.

Beispielsweise kann der zweite Haken 5 in der Aufstell- bzw. Verriegelungsposition in Bezug auf die Vertikalrichtung Z über die Seitenteile 11, 12 vorstehen, insbesondere mit dessen Hakenabschnitt 52, wie dies in Fig. 3 gezeigt ist. Wie sich aus Fig. 3 ferner ergibt, kreuzen sich in der Aufstellposition von ersten und zweitem Haken 3, 5 die Profilabschnitte 31, 51 von ersten und zweitem Haken 3, 5, Ferner sind der zweite Haken 5 und der erste Haken 3 in deren Aufstellposition miteinander derart verrastet, dass der zweite Haken 5 den ersten Haken 3 in dessen Aufstellposition gegen ein Verschwenken zurück in die Verstauposition sichert. In der Aufstellposition kann der zweite Haken 5 ebenfalls zur Sicherung eines Frachtstücks angeordnet oder positioniert sein. Durch die Form des zweiten Hakens 5 mit Profilabschnitt 51 und Hakenabschnitt 52 kann in der Aufstellposition ein Frachtstück z.B. in Bezug auf die Vertikalrichtung Z und die Längsrichtung X gegen Verrutschen gesichert werden.

Wie in Fig. 2 beispielhaft gezeigt, können der erste und der zweite Haken 3, 5 über eine Feder 35 aneinander gekoppelt sein. Die Feder 35 kann mit dem ersten Haken 3 an einer ersten Anbindungsstelle 34 verbunden sein, welche in dem entgegengesetzt zum Hakenabschnitt 32 gelegenen Endbereich des Profilabschnitts 31 beabstandet zu der ersten Drehachse A2 gelegen ist, insbesondere zwischen der ersten Drehachse A2 und einem abgewandt vom Hakenabschnitt 32 gelegenen Ende des Profilabschnitts 31. In gleicher Weise kann die Feder 35 mit dem zweiten Haken 5 an einer zweiten Anbindungsstelle 54 verbunden sein, welche in dem entgegengesetzt zum Hakenabschnitt 52 gelegenen Endbereich des Profilabschnitts 51 beabstandet zu der zweiten Drehachse A4 gelegen ist, insbesondere zwischen der zweiten Drehachse A4 und einem abgewandt vom Hakenabschnitt 52 gelegenen Ende des Profilabschnitts 51.

Eine Verschwenken des ersten Hakens 3 um die erste Drehachse A2 führt somit dazu, dass die Feder 35 eine Zugkraft auf die Anbindungsstelle 54 am zweiten Haken 5 aufbringt. Dadurch wird ein Drehmoment um die zweite Drehachse A4 an den zweiten Haken 5 angelegt und der zweite Haken 5 wird vom ersten Haken 3 über die Feder 35 in die Aufstellposition mitgezogen. Um die Haken 3, 5 aus der Aufstellposition zurück in die Verstauposition zu bewegen, wird der zweite Haken 5 um die zweite Drehachse A4 in Richtung der Seitenteile 11, 12 geschwenkt, wodurch die Verrastung zwischen ersten und zweitem Haken 3, 5 gelöst wird. Die Feder 35 bringt ferner eine Zugkraft auf die erste Anbindungsstelle 34 am ersten Haken 3 auf, wodurch dieser infolge des resultierenden Drehmoments um die erste Drehachse A2 in Richtung der Seitenteile 11, 12 in seine Verstauposition bewegt wird.

Die Erfindung ist nicht auf eine Kopplung der Haken 3, 5 über eine Feder 35 beschränkt, sondern es sind auch andere Möglichkeiten der kinematischen Kopplung denkbar, z.B. über ein Gestänge oder dergleichen. Allgemein sind der erste Haken 3 und der zweite Haken 5 kinematisch derart gekoppelt, dass ein Verschwenken des ersten Hakens 3 aus dessen Verstauposition in dessen Verriegelungsposition ein Verschwenken des zweiten Hakens 5 aus dessen Verstauposition in dessen Aufstellposition bewirkt, und dass ein Verschwenken des zweiten Hakens 5 aus dessen Aufstellposition in dessen Verstauposition ein Verschwenken des ersten Hakens 3 aus dessen Verriegelungsposition in dessen Verstauposition bewirkt.

Wie in Fig. 3 erkennbar, ist die erste Welle 2 mit einem ersten Hakenmitnehmer 20A und die zweite Welle 4 mit einem zweiten Hakenmitnehmer 40A versehen. Die Hakenmitnehmer 20A, 40A können z.B. in radialer Richtung von der jeweiligen Welle 2, 4 vorstehende Strukturen ausgebildet sein. In Fig. 3 ist beispielhaft gezeigt, dass die Hakenmitnehmer 20A, 40A ringsegmentförmig ausgebildet sind. Die Hakenmitnehmer 20A, 40A sind fest mit der jeweiligen Welle 2, 4 verbunden. Beispielsweise können die Hakenmitnehmern 20A, 40A einstückig mit der Welle 2, 4 ausgebildet sein, mit der jeweiligen Welle 2, 4 verschweißt, verschraubt oder in anderer Weise daran befestigt sein. Da die Haken 3, 5 drehfest mit der jeweiligen Welle 2, 4 verbunden sind, sind die Hakenmitnehmer 20A, 40A in Bezug auf eine Drehung um die jeweilige Drehachse A2, A4 ortsfest relativ zu dem jeweiligen Haken 3, 5 angeordnet. Alternativ könnten die Hakenmitnehmer 20A, 40A auch direkt an dem jeweiligen Haken 3, 5 angebracht sein. Allgemein sind somit ein in Bezug auf eine Drehung um die erste Drehachse A2 drehfest an den ersten Haken 3 gekoppelter erster Hakenmitnehmer 20A und ein in Bezug auf eine Drehung um die zweite Drehachse A4 drehfest an den zweiten Haken 5 gekoppelter zweiter Hakenmitnehmer 40A vorgesehen.

Wie in Fig. 3 beispielhaft gezeigt, weist das Getriebe 6 ein erstes Mitnehmerrad 61 und ein zweites Mitnehmerrad 62 auf. Optional können ein oder mehrere erste Zwischenräder 63 vorgesehen sein. Fig. 3 zeigt weiterhin, dass das Getriebe 6 ferner ein Eingangsrad 65 und optional zusätzlich ein zweites Zwischenrad 64 aufweisen kann.

Wie in Fig. 3 rein beispielhaft gezeigt, können die Mitnehmerräder 61, 62 als Zahnräder realisiert sein. Das erste Mitnehmerrad 61 weist einen ersten Mitnehmer 61A auf. Das zweite Mitnehmerrad 62 weist einen zweiten Mitnehmer 62A auf. Die Mitnehmer 61A, 62A können beispielsweise als ringsegmentförmige Abschnitte bzw. Vorsprünge realisiert sein, welche an den Stirnseiten der Mitnehmerräder 61, 62 angebracht sind. Das erste Mitnehmerrad 61 ist um die erste Drehachse A2 drehbar gelagert, z.B. an der ersten Welle 2. Somit ist der erste Mitnehmer 61A mit dem ersten Hakenmitnehmer 20A in Eingriff bringbar und es kann, wenn die ersten Mitnehmer 61A, 20A aneinander anliegen, ein Drehmoment auf die Welle 2 und somit auf den ersten Haken 3 übertragen werden. Das zweite Mitnehmerrad 62 ist um die zweite Drehachse A4 drehbar gelagert, z.B. an der zweiten Welle 4. Somit ist der zweite Mitnehmer 62A mit dem zweiten Hakenmitnehmer 40A in Eingriff bringbar und es kann, wenn die zweiten Mitnehmer 62A, 40A aneinander anliegen, ein Drehmoment auf die zweite Welle 4 und somit auf den zweiten Haken 5 übertragen werden.

Das erste und das zweite Mitnehmerrad 61, 62 sind kinematisch derart aneinander gekoppelt, dass sie sich synchron drehen. Das heißt, die Drehung eines Mitnehmerrads 61, 62 bewirkt eine Drehung des jeweils anderen Mitnehmerrads 62, 61, jedoch nicht notwendigerweise mit derselben Drehzahl. Die Mitnehmerräder 61, 62 können z.B. über eine Anzahl an n ersten Zwischenzahnrädern 63 kinematisch aneinander gekoppelt sein. In Fig. 3 ist rein beispielhaft gezeigt, dass drei erste Zwischenräder 63 (n=3) vorgesehen sind, die mit den Mitnehmerrädern 61, 62 bzw. miteinander in Eingriff stehen. Für eine kinematische Kopplung, die eine Drehung von erstem und zweitem Mitnehmerrad 61, 62 in derselben Drehrichtung bewirkt, ist erforderlich, dass n eine ungerade ganze Zahl ist. In Fig. 3 ist somit beispielhaft gezeigt, dass das erste Mitnehmerrad 61 und das zweite Mitnehmerrad 62 derart aneinander gekoppelt sind, dass sie ausschließlich in derselben Drehrichtung drehbar sind. Für eine kinematische Kopplung, die eine Drehung von erstem und zweitem Mitnehmerrad 61, 62 in derselben Drehrichtung bewirkt, ist erforderlich, dass n eine gerade ganze Zahl ist.

Wie in Fig. 3 schematisch und rein beispielhaft gezeigt, können die Zwischenräder 63, 64 und/oder das Eingangsrad 65 an einem der Seitenteile 11, 12 des Rahmens 1 gelagert sein. In Fig. 3 ist beispielhaft eine Lagerung am zweiten Seitenteil 12 gezeigt.

Das Eingangsrad 65 kann ebenfalls als Zahnrad realisiert sein und, wie in Fig. 3 beispielhaft gezeigt, über das zweite Zwischenzahnrad 64, das mit dem Eingangsrad 65 und dem zweiten Mitnehmerrad 62 in Eingriff steht, mit einem der Mitnehmerräder 61, 62 (in Fig. 3 dem zweiten Mitnehmerrad 62) gekoppelt sein. Das zweiten Zwischenzahnrad 64 ist grundsätzlich optional. Vorteilhaft an der gezeigten Anordnung des zweiten Zwischenzahnrads 64 ist, dass das Eingangsrad 65 beabstandet zu dem zweiten Mitnehmerrad 62 angeordnet sein kann, was die Designfreiheit vergrößert. Das Eingangsrad 65 ist durch den Antriebsmotor 7 antreibbar bzw. drehbar.

Durch das Getriebe 6 ist somit allgemein ein Drehmoment von dem Antriebsmotor 7 auf die Mitnehmerräder 61, 62 und über deren Mitnehmer 61A, 62A auf die an die Haken 3, 5 gekoppelten Hakenmitnehmer 20A, 40A übertragbar. Der erste Mitnehmer 61A ist relativ zu dem ersten Hakenmitnehmer 20A und der zweite Mitnehmer 62A ist relativ zu dem zweiten Hakenmitnehmer 40A derart positioniert sind, dass bei einer Drehung der Mitnehmerräder 61A, 62A nur einer der Mitnehmer 61A, 62A mit dem jeweiligen Hakenmitnehmer 20A, 40A in Eingriff bringbar ist.

In den Fign. 4(A) und 4(B) sind die Stellungen von erstem Mitnehmer 61A relativ zum ersten Hakenmitnehmer 20A und von zweitem Mitnehmer 62A relativ zum zweiten Hakenmitnehmer 40A für die Verstauposition und die Aufstellposition gezeigt.

In Fig. 4(A) ist die Ausgangslage für ein Verschwenken der Haken 3, 5 aus der Verstauposition in die Aufstellposition gezeigt. Hierzu werden die Mitnehmerräder 61, 62 in derselben Drehrichtung RD1 gedreht, wobei der erste Mitnehmer 61A in Bezug auf die Drehrichtung RD1 näher an dem ersten Hakenmitnehmer 20A positioniert ist als der zweite Mitnehmer 62A relativ zum zweiten Hakenmitnehmer 40A. Somit gelangt der erste Mitnehmer 61A mit dem ersten Hakenmitnehmer 20A in Eingriff bevor der zweite Mitnehmer 62A den zweiten Hakenmitnehmer 40A erreicht. Folglich wird zum Verschwenken des ersten Hakens 3 aus dessen Verstauposition in dessen Aufstellposition ein Drehmoment nur auf die erste Welle 2 und somit nur auf den ersten Haken 3 übertragen. Aufgrund der kinematischen Kopplung des zweiten Hakens 5 an den ersten Haken 3, im Beispiel von Fig. 2 über die Feder 35, wird der zweite Haken 5 mitgezogen, insbesondere ohne dass der zweite Mitnehmer 62A mit dem zweiten Hakenmitnehmer 40A in Eingriff gelangt.

In Fig. 4(B) ist die Ausgangslage für ein Verschwenken der Haken 3, 5 aus der Aufstellposition in die Verstauposition gezeigt. Hierzu werden die Mitnehmerräder 61, 62 in derselben Drehrichtung RD2 gedreht, die entgegengesetzt zur Drehrichtung RD1 zum Aufstellen ist. Hierbei ist der zweite Mitnehmer 62A in Bezug auf die Drehrichtung RD2 näher an dem zweiten Hakenmitnehmer 40A positioniert als der erste Mitnehmer 61A relativ zum ersten Hakenmitnehmer 20A. Somit gelangt der zweite Mitnehmer 62A mit dem zweiten Hakenmitnehmer 40A in Eingriff bevor der erste Mitnehmer 61A den ersten Hakenmitnehmer 20A erreicht. Folglich wird zum Verschwenken des zweiten Hakens 4 aus dessen Aufstellposition in dessen Verstauposition ein Drehmoment nur auf die zweite Welle 4 und somit nur auf den zweiten Haken 5 übertragen. Aufgrund der kinematischen Kopplung des zweiten Hakens 5 an den ersten Haken 3, beispielsweise über die Feder 35, wird der erste Haken 3 mitgezogen, insbesondere ohne dass der erste Mitnehmer 61A mit dem ersten Hakenmitnehmer 20A in Eingriff gelangt.

Der Antriebsmotor 7 kann z.B. als Elektromotor ausgeführt sein. Allgemein ist der Antriebsmotor an die Mitnehmerräder 61, 62 gekoppelt um diese anzutreiben. Z.B. kann das optionale Eingangsrad 65 mit einer Antriebswelle 71 des Antriebsmotors 7 verbunden sein, wie dies in Fig. 1 schematisch gezeigt ist. Wie in Fig. 1 weiterhin beispielhaft und schematisch dargestellt ist, kann der Antriebsmotor 7 in Bezug auf die Querrichtung Y zwischen den Seitenteilen 11, 12 des Rahmens 1 angeordnet sein.

Die optionale elektronische Steuerungsvorrichtung 8 ist in Fig. 1 lediglich symbolisch als Block dargestellt und kann insbesondere einen Prozessor, z.B. eine CPU, einen FPGA, einen ASIC oder dergleichen, und einen nicht-flüchtigen Datenspeicher, wie einen SD-Speicher, eine HD-Speicher, einen Flash-Speicher oder dergleichen, aufweisen, um Ausgangssignale basierend auf Eingangssignalen zu erzeugen und auszugeben. Die Steuerungsvorrichtung 8 kann zumindest eine Eingangsschnittstelle zum Empfang der Eingangssignale und zumindest eine Ausgangschnittstelle zur Ausgabe der Ausgangssignale aufweisen. Die Eingangs- und Ausgangsschnittstellen können z.B. drahtgebundene Schnittstellen und/oder drahtlose Schnittstellen umfassen.

Die Steuerungsvorrichtung 8 ist signalleitend mit dem Antriebsmotor 7 verbunden, z.B. über die Ausgangsschnittstelle. Insbesondere ist die Steuerungsvorrichtung 8 dazu ausgebildet, Steuersignale als Ausgabesignale zu erzeugen, um den Betrieb des Antriebsmotors 7 zu steuern, z.B. um die Drehrichtung des Motors 7 zu ändern und/oder den Motor 7 zu aktivieren oder zu deaktivieren.

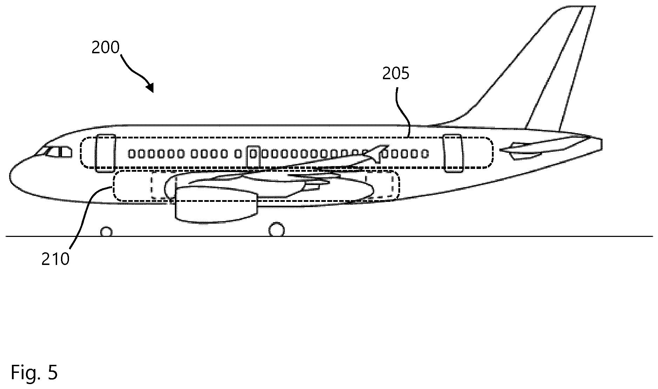

Die Sensoranordnung 9 kann, wie in Fig. 1 rein beispielhaft und lediglich symbolisch gezeigt, zumindest einen Sensor 91, 92 je Haken 3, 5 aufweisen, z.B. in Form von Näherungssensoren. Allgemein ist die Sensoranordnung 9 dazu eingerichtet, die jeweilige Position des ersten Hakens 3 und des zweiten Hakens 4 zu detektieren. Die Sensoren 91, 92 der Sensoranordnung 9 sind signalleitend mit der Steuerungsvorrichtung 8 verbunden, z.B. mit deren Eingangsschnittstelle. Die Steuerungsvorrichtung 8 kann beispielsweise dazu eingerichtet sein, den Antriebsmotor 7 abhängig von der detektierten Position der Haken 3, 4 mit verschiedenen Drehrichtungen zu betreiben und/oder den Betrieb des Antriebsmotors 7 zu stoppen, wenn die detektierte Position der Haken deren Verstauposition oder deren Aufstellposition bzw. Verriegelungsposition entspricht. In Fig. 5 ist schematisch ein Luftfahrzeug 200 dargestellt. Wie in Fig. 5 gezeigt, kann es sich bei dem Luftfahrzeug 200 z.B. um ein Passagierflugzeug mit einer Passagierkabine 205 und einem Frachtraum 210 handeln. Das Luftfahrzeug 200 umfasst das oben beschriebene Verriegelungssystem 100, wobei der Rahmen 1 an dem Boden 210 des Frachtraums 210 befestigt ist (Fig. 1).

Obwohl die vorliegende Erfindung vorstehend anhand von Ausführungsbeispielen exemplarisch erläutert wurde, ist sie darauf nicht beschränkt, sondern auf vielfältige Weise modifizierbar.

### BEZUGSZEICHENLISTE

- 1: Rahmen
- 2: erste Welle
- 3: erster Haken
- 4: zweite Welle
- 5: zweiter Haken
- 6: Getriebe
- 7: Antriebsmotor
- 8: Steuerungsvorrichtung
- 9: Sensoranordnung

- 11: erstes Seitenteil
- 12: zweites Seitenteil
- 13, 14: Querverbinder
- 20A: erster Hakenmitnehmer
- 31: Profilabschnitt des ersten Hakens
- 32: Hakenabschnitt des ersten Hakens
- 34: Anbindungsstelle des ersten Hakens
- 35: Feder
- 40A: zweiter Hakenmitnehmer
- 51: Profilabschnitt des zweiten Hakens
- 52: Hakenabschnitt des zweiten Hakens
- 54: Anbindungsstelle des zweiten Hakens
- 61: erstes Mitnehmerrad
- 61A: erster Mitnehmer
- 62: zweites Mitnehmerrad
- 62A: zweiter Mitnehmer
- 63: erste Zwischen(zahn)räder
- 64: zweites Zwischen(zahn)rad
- 65: Eingangsrad
- 71: Antriebswelle
- 91,92: Sensoren

- 100: Verriegelungssystem
- 200: Luftfahrzeug
- 205: Passagierkabine
- 210: Frachtraum
- 211: Boden

- A2: erste Drehachse
- A4: zweite Drehachse
- RD1: erste Drehrichtung
- RD2: zweite Drehrichtung
- X: Längsrichtung
- Y: Querrichtung
- Z: Vertikalrichtung

## Patentansprüche

1. Verriegelungssystem (100) zum Sichern von Frachtstücken im Frachtraum eines Luftfahrzeugs (200), aufweisend:
einen Rahmen (1) mit einem ersten Seitenteil (11) und einem sich parallel zu dem ersten Seitenteil (11) erstreckenden zweiten Seitenteil (12);
einen um eine erste Drehachse (A2) an den Seitenteilen (11, 12) drehbar gelagerten ersten Haken (3), der um die erste Drehachse (A2) zwischen einer Verstauposition, in welcher der erste Haken (3) sich entlang der Seitenteile (11, 12) erstreckt, und einer Verriegelungsposition zur Sicherung eines Frachtstücks verschwenkbar ist, in welcher der erste Haken (3) sich quer zu den Seitenteilen (11, 12) erstreckt;
einen in Bezug auf eine Drehung um die erste Drehachse (A2) drehfest an den ersten Haken (3) gekoppelten ersten Hakenmitnehmer (20A);
einen um eine zweite Drehachse (A4) an den Seitenteilen (11, 12) drehbar gelagerten zweiten Haken (5), der um die zweite Drehachse (A4) zwischen einer Verstauposition, in welcher der zweite Haken (5) sich entlang der Seitenteile (11, 12) erstreckt, und einer Aufstellposition verschwenkbar ist, in welcher der zweite Haken (5) mit dem ersten Haken (3) verrastet ist und den ersten Haken (3) in dessen Verriegelungsposition gegen ein Verschwenken zurück in die Verstauposition sichert, wobei der zweite Haken (5) derart kinematisch an den ersten Haken (3) gekoppelt ist, dass ein Verschwenken des ersten Hakens (3) aus dessen Verstauposition in dessen Verriegelungsposition ein Verschwenken des zweiten Hakens (5) aus dessen Verstauposition in dessen Aufstellposition bewirkt, und dass ein Verschwenken des zweiten Hakens (5) aus dessen Aufstellposition in dessen Verstauposition ein Verschwenken des ersten Hakens (3) aus dessen Verriegelungsposition in dessen Verstauposition bewirkt;
einen in Bezug auf eine Drehung um die zweite Drehachse (A4) drehfest an den zweiten Haken (5) gekoppelten zweiten Hakenmitnehmer (40A);
ein Getriebe (6) mit einem um die erste Drehachse (A2) relativ zum ersten Haken (3) drehbaren ersten Mitnehmerrad (61), welches einen mit dem ersten Hakenmitnehmer (20A) in Eingriff bringbaren ersten Mitnehmer (61A) aufweist, und einem relativ zum zweiten Haken (5) um die zweite Drehachse (A2) drehbaren zweiten Mitnehmerrad (62), welches einen mit dem zweiten Hakenmitnehmer (40A) in Eingriff bringbaren zweiten Mitnehmer (62A) aufweist, wobei das erste und das zweite Mitnehmerrad (61, 62) kinematisch derart aneinander gekoppelt sind, dass diese synchron drehbar sind, und
wobei der erste Mitnehmer (61A) relativ zu dem ersten Hakenmitnehmer (20A) und der zweite Mitnehmer (62A) relativ zu dem zweiten Hakenmitnehmer (40A) derart positioniert sind, dass bei einer Drehung der Mitnehmerräder (61A, 62A) nur einer der Mitnehmer (61A, 62A) mit dem jeweiligen Hakenmitnehmer (20A, 40A) in Eingriff bringbar ist, um zum Verschwenken des ersten Hakens (4) aus dessen Verstauposition in dessen Verriegelungsposition ein Drehmoment nur auf den ersten Haken (3) und
zum Verschwenken des zweiten Hakens (5) aus dessen Aufstellposition in dessen Verstauposition ein Drehmoment nur auf den zweiten Haken (5) zu übertragen; und
einen an das Getriebe (6) gekoppelten Antriebsmotor (7) zur Drehung der Mitnehmerräder (61, 62);
wobei das erste Mitnehmerrad (61) und das zweite Mitnehmerrad (62) derart aneinander gekoppelt sind, dass sie ausschließlich in derselben Drehrichtung drehbar sind;
wobei das erste und das zweite Mitnehmerrad (61, 62) als Zahnräder realisiert sind, wobei das erste und das zweite Mitnehmerrad (61, 62) über eine Anzahl an n Zwischenzahnrädern (63) kinematisch aneinander gekoppelt sind, welche mit den Mitnehmerrädern (61, 62) in Eingriff stehen, wobei n eine ungerade ganze Zahl ist.

2. Verriegelungssystem (100) nach Anspruch 1, wobei die Zwischenzahnräder (63, 64) an den Seitenteilen (11, 12) des Rahmens (1) gelagert sind.

3. Verriegelungssystem (100) nach einem der voranstehenden Ansprüche, wobei der erste Haken (3) drehfest mit einer ersten Welle (2) verbunden ist, welche sich zwischen den Seitenteilen (11, 12) des Rahmens (1) erstreckt und an den Seitenteilen (11, 12) um die erste Drehachse (A20) drehbar gelagert ist.

4. Verriegelungssystem (100) nach Anspruch 3, wobei der erste Hakenmitnehmer (20A) an der ersten Welle (2) angebracht ist.

5. Verriegelungssystem (100) nach einem der voranstehenden Ansprüche, wobei der zweite Haken (5) drehfest mit einer zweiten Welle (4) verbunden ist, welche sich zwischen den Seitenteilen (11, 12) des Rahmens (1) erstreckt und an den Seitenteilen (11, 12) um die zweite Drehachse (A40) drehbar gelagert ist.

6. Verriegelungssystem (100) nach Anspruch 5, wobei der zweite Hakenmitnehmer (40A) an der zweiten Welle (4) angebracht ist.

7. Verriegelungssystem (100) nach einem der voranstehenden Ansprüche, wobei das Getriebe (6) ein Eingangsrad (65) aufweist, welches die Mitnehmerräder (61, 62) antreibt und welches mit einer Antriebswelle (71) des Antriebsmotors (7) verbunden ist.

8. Verriegelungssystem (100) nach einem der voranstehenden Ansprüche, wobei der Antriebsmotor (7) zwischen den Seitenteilen (11, 12) des Rahmens (1) angeordnet ist.

9. Verriegelungssystem (100) nach einem der voranstehenden Ansprüche, wobei der erste Haken (3) und der zweite Haken (5) über eine Feder (35) aneinander gekoppelt sind.

10. Verriegelungssystem (100) nach einem der voranstehenden Ansprüche, zusätzlich aufweisend:
eine elektronische Steuerungsvorrichtung (8), welche mit dem Antriebsmotor (7) signalleitend verbunden ist; und
eine signalleitend mit der Steuerungsvorrichtung (8) verbundene Sensoranordnung (9), die dazu eingerichtet ist, die jeweilige Position des ersten Hakens (3) und des zweiten Hakens (4) zu detektieren;
wobei die Steuerungsvorrichtung (8) dazu eingerichtet ist, den Antriebsmotor (7) abhängig von der detektierten Position der Haken (3, 4) mit verschiedenen Drehrichtungen zu betreiben und/oder den Betrieb des Antriebsmotors (7) zu stoppen, wenn die detektierte Position der Haken deren Verstauposition oder deren Aufstellposition bzw.
Verriegelungsposition entspricht.

11. Luftfahrzeug (200), aufweisend:
einen Frachtraum (210) zur Aufnahme von Frachtstücken mit einem Boden (211); und
ein Verriegelungssystem (100) nach einem der voranstehenden Ansprüche;
wobei der Rahmen (1) an dem Boden (210) des Frachtraums (210) befestigt ist.

## Claims

1. Locking system (100) for securing items of cargo in the cargo hold of an aircraft (200), having:
a frame (1) with a first side part (11) and a second side part (12), which extends parallel to the first side part (11) ;
a first hook (3), which is mounted on the side parts (11, 12) so as to be able to rotate about a first axis of rotation (A2) and can be pivoted about the first axis of rotation (A2) between a stowed position, in which the first hook (3) extends along the side parts (11, 12), and
a locking position, for securing an item of cargo, in which the first hook (3) extends transversely to the side parts (11, 12);
a first hook driver (20A), which is coupled to the first hook (3) for conjoint rotation with respect to rotation about the first axis of rotation (A2);
a second hook (5), which is mounted on the side parts (11, 12) so as to be able to rotate about a second axis of rotation (A4) and can be pivoted about the second axis of rotation (A4) between a stowed position, in which the second hook (5) extends along the side parts (11, 12), and a deployed position, in which the second hook (5) is latched to the first hook (3) and secures the first hook (3), in its locking position, against pivoting back into the stowed position, wherein the second hook (5) is coupled kinematically to the first hook (3) in such a manner that pivoting of the first hook (3) from its stowed position into its locking position causes pivoting of the second hook (5) from its stowed position into its deployed position, and that pivoting of the second hook (5) from its deployed position into its stowed position causes pivoting of the first hook (3) from its locking position into its stowed position;
a second hook driver (40A), which is coupled to the second hook (5) for conjoint rotation with respect to rotation about the second axis of rotation (A4);
a gear mechanism (6) with a first driver wheel (61), which can be rotated relative to the first hook (3) about the first axis of rotation (A2) and has a first driver (61A), which can be brought into engagement with the first hook driver (20A), and a second driver wheel (62), which can be rotated about the second axis of rotation (A2) relative to the second hook (5) and has a second driver (62A), which can be brought into engagement with the second hook driver (40A), wherein the first and the second driver wheels (61, 62) are coupled kinematically to one another in such a manner that they can be rotated synchronously, and wherein the first driver (61A) is positioned relative to the first hook driver (20A) and the second driver (62A) is positioned relative to the second hook driver (40A) in such a manner that, when the driver wheels (61A, 62A) are rotated, only one of the drivers (61A, 62A) can be brought into engagement with the respective hook driver (20A, 40A) in order, for the purpose of pivoting the first hook (4) from its stowed position into its locking position, to transmit a torque only to the first hook (3) and, for the purpose of pivoting the second hook (5) from its deployed position into its stowed position, to transmit a torque only to the second hook (5); and
a drive motor (7), which is coupled to the gear mechanism (6), for rotating the driver wheels (61, 62);
wherein the first driver wheel (61) and the second driver wheel (62) are coupled to one another in such a manner that they can only be rotated in the same direction of rotation;
wherein the first and the second driver wheels (61, 62) are realized as gearwheels, wherein the first and the second driver wheels (61, 62) are coupled kinematically to one another via a number of n intermediate gearwheels (63), which are in engagement with the driver wheels (61, 62), wherein n is an odd integer.

2. Locking system (100) according to Claim 1, wherein the intermediate gearwheels (63, 64) are mounted on the side parts (11, 12) of the frame (1).

3. Locking system (100) according to either of the preceding claims, wherein the first hook (3) is connected for conjoint rotation to a first shaft (2), which extends between the side parts (11, 12) of the frame (1) and is mounted on the side parts (11, 12) so as to be able to rotate about the first axis of rotation (A20).

4. Locking system (100) according to Claim 3, wherein the first hook driver (20A) is attached to the first shaft (2).

5. Locking system (100) according to one of the preceding claims, wherein the second hook (5) is connected for conjoint rotation to a second shaft (4), which extends between the side parts (11, 12) of the frame (1) and is mounted on the side parts (11, 12) so as to be able to rotate about the second axis of rotation (A40).

6. Locking system (100) according to Claim 5, wherein the second hook driver (40A) is attached to the second shaft (4).

7. Locking system (100) according to one of the preceding claims, wherein the gear mechanism (6) has an input wheel (65), which drives the driver wheels (61, 62) and which is connected to a drive shaft (71) of the drive motor (7).

8. Locking system (100) according to one of the preceding claims, wherein the drive motor (7) is arranged between the side parts (11, 12) of the frame (1).

9. Locking system (100) according to one of the preceding claims, wherein the first hook (3) and the second hook (5) are coupled to one another via a spring (35) .

10. Locking system (100) according to one of the preceding claims, additionally having:
an electronic control device (8), which is connected to the drive motor (7) in a signal-conducting manner; and
a sensor arrangement (9), which is connected to the control device (8) in a signal-conducting manner and is configured to detect the respective position of the first hook (3) and of the second hook (4);
wherein the control device (8) is configured to operate the drive motor (7) with different directions of rotation depending on the detected position of the hooks (3, 4) and/or to stop operation of the drive motor (7) when the detected position of the hooks corresponds to their stowed position or their deployed position or locking position.

11. Aircraft (200), having:
a cargo hold (210) for receiving items of cargo and having a base (211); and
a locking system (100) according to one of the preceding claims; wherein the frame (1) is fastened to the base (210) of the cargo hold (210).

## Revendications

1. Système de verrouillage (100) pour sécuriser des pièces de fret dans le compartiment de fret d'un aéronef (200), présentant :
un cadre (1) avec une première partie latérale (11) et une deuxième partie latérale (12) s'étendant parallèlement à la première partie latérale (11) ;
un premier crochet (3) monté de manière rotative sur les parties latérales (11, 12) autour d'un premier axe de rotation (A2), qui peut pivoter autour du premier axe de rotation (A2) entre une position de rangement, dans laquelle le premier crochet (3) s'étend le long des parties latérales (11, 12), et une position de verrouillage pour sécuriser une pièce de fret, dans laquelle le premier crochet (3) s'étend transversalement aux parties latérales (11, 12) ;
un premier entraîneur de crochet (20A) couplé de manière solidaire en rotation au premier crochet (3) par rapport à une rotation autour du premier axe de rotation (A2) ;
un deuxième crochet (5) monté de manière rotative sur les parties latérales (11, 12) autour d'un deuxième axe de rotation (A4), qui peut pivoter autour du deuxième axe de rotation (A4) entre une position de rangement, dans laquelle le deuxième crochet (5) s'étend le long des parties latérales (11, 12), et une position de déploiement, dans laquelle le deuxième crochet (5) est encliqueté avec le premier crochet (3) et empêche le premier crochet (3) de pivoter en arrière dans la position de rangement dans sa position de verrouillage, le deuxième crochet (5) étant couplé cinématiquement au premier crochet (3) de telle sorte qu'un pivotement du premier crochet (3) de sa position de rangement à sa position de verrouillage provoque un pivotement du deuxième crochet (5) de sa position de rangement à sa position de déploiement, et qu'un pivotement du deuxième crochet (5) de sa position de déploiement à sa position de rangement provoque un pivotement du premier crochet (3) de sa position de verrouillage à sa position de rangement ;
un deuxième entraîneur de crochet (40A) couplé de manière solidaire en rotation au deuxième crochet (5) par rapport à une rotation autour du deuxième axe de rotation (A4) ; une transmission (6) avec une première roue d'entraîneur (61) rotative autour du premier axe de rotation (A2) par rapport au premier crochet (3), laquelle présente un premier entraîneur (61A) pouvant être mis en prise avec le premier entraîneur de crochet (20A), et une deuxième roue d'entraîneur (62) rotative autour du deuxième axe de rotation (A2) par rapport au deuxième crochet (5), laquelle présente un deuxième entraîneur (62A) pouvant être mis en prise avec le deuxième entraîneur de crochet (40A), la première et la deuxième roue d'entraîneur (61, 62) étant couplées cinématiquement l'une à l'autre de telle sorte que celles-ci sont rotatives de manière synchrone, et le premier entraîneur (61A) étant positionné par rapport au premier entraîneur de crochet (20A) et le deuxième entraîneur (62A) étant positionné par rapport au deuxième entraîneur de crochet (40A) de telle sorte que, lors d'une rotation des roues d'entraîneur (61A, 62A), un seul des entraîneurs (61A, 62A) peut être mis en prise avec l'entraîneur de crochet respectif (20A, 40A) afin de transmettre un couple uniquement au premier crochet (3) pour faire pivoter le premier crochet (4) de sa position de rangement à sa position de verrouillage et un couple uniquement au deuxième crochet (5) pour faire pivoter le deuxième crochet (5) de sa position de déploiement à sa position de rangement ; et
un moteur d'entraînement (7) couplé à la transmission (6) pour faire tourner les roues d'entraîneur (61, 62) ;
la première roue d'entraîneur (61) et la deuxième roue d'entraîneur (62) étant couplées l'une à l'autre de telle sorte qu'elles sont rotatives exclusivement dans la même direction de rotation ;
la première et la deuxième roue d'entraîneur (61, 62) étant réalisées sous forme de roues dentées, la première et la deuxième roue d'entraîneur (61, 62) étant couplées cinématiquement l'une à l'autre par l'intermédiaire d'un nombre n de roues dentées intermédiaires (63) qui sont en prise avec les roues d'entraîneur (61, 62), n étant un nombre entier impair.

2. Système de verrouillage (100) selon la revendication 1, dans lequel les roues dentées intermédiaires (63, 64) sont montées sur les parties latérales (11, 12) du cadre (1) .

3. Système de verrouillage (100) selon l'une quelconque des revendications précédentes, dans lequel le premier crochet (3) est relié de manière solidaire en rotation à un premier arbre (2) qui s'étend entre les parties latérales (11, 12) du cadre (1) et qui est monté de manière rotative sur les parties latérales (11, 12) autour du premier axe de rotation (A20).

4. Système de verrouillage (100) selon la revendication 3, dans lequel le premier entraîneur de crochet (20A) est disposé sur le premier arbre (2).

5. Système de verrouillage (100) selon l'une quelconque des revendications précédentes, dans lequel le deuxième crochet (5) est relié de manière solidaire en rotation à un deuxième arbre (4) qui s'étend entre les parties latérales (11, 12) du cadre (1) et qui est monté de manière rotative sur les parties latérales (11, 12) autour du deuxième axe de rotation (A40).

6. Système de verrouillage (100) selon la revendication 5, dans lequel le deuxième entraîneur de crochet (40A) est disposé sur le deuxième arbre (4).

7. Système de verrouillage (100) selon l'une quelconque des revendications précédentes, dans lequel la transmission (6) présente une roue d'entrée (65) qui entraîne les roues d'entraîneur (61, 62) et qui est reliée à un arbre d'entraînement (71) du moteur d'entraînement (7).

8. Système de verrouillage (100) selon l'une quelconque des revendications précédentes, dans lequel le moteur d'entraînement (7) est agencé entre les parties latérales (11, 12) du cadre (1).

9. Système de verrouillage (100) selon l'une quelconque des revendications précédentes, dans lequel le premier crochet (3) et le deuxième crochet (5) sont couplés l'un à l'autre par l'intermédiaire d'un ressort (35).

10. Système de verrouillage (100) selon l'une quelconque des revendications précédentes, présentant en outre :
un dispositif de commande électronique (8) relié de manière à conduire des signaux au moteur d'entraînement (7) ; et
un agencement de capteur (9) relié de manière à conduire des signaux au dispositif de commande (8), qui est conçu pour détecter la position respective du premier crochet (3) et du deuxième crochet (4) ;
le dispositif de commande (8) étant conçu pour faire fonctionner le moteur d'entraînement (7) dans différentes directions de rotation en fonction de la position détectée des crochets (3, 4) et/ou pour arrêter le fonctionnement du moteur d'entraînement (7) lorsque la position détectée des crochets correspond à leur position de rangement ou à leur position de déploiement ou position de verrouillage.

11. Aéronef (200), présentant :
un compartiment de fret (210) destiné à recevoir des pièces de fret avec un plancher (211) ; et
un système de verrouillage (100) selon l'une quelconque des revendications précédentes ; le cadre (1) étant fixé au plancher (210) du compartiment de fret (210).
